# EUROPEAN PATENT SPECIFICATION

(11) **EP 3 848 900 B1**
(45) Date of publication and mention of the grant of the patent: **04.11.2026**
(21) Application number: 20151132.6
(22) Date of filing: 10.01.2020
(51) Int. Cl.: H04N 17/00, G01B 11/25, G06T 7/80

(54) **METHODS AND SYSTEMS FOR CALIBRATING A CAMERA**
VERFAHREN UND SYSTEME ZUR KALIBRIERUNG EINER KAMERA
PROCÉDÉS ET SYSTÈMES POUR L'ÉTALONNAGE D'UNE CAMÉRA

(43) Date of publication of application: 14.07.2021
(73) Proprietor: Aptiv Technologies AG, 8200 Schaffhausen (CH)
(72) Inventor: Dworakowski, Waldemar, 30-603 Krakow (PL)
(74) Representative: Manitz Finsterwald Patent- und Rechtsanwaltspartnerschaft mbB

(56) References cited:
- US-A1- 2010 165 116
- US-A1- 2016 182 903
- US-A1- 2019 164 308
- US-B1- 8 326 084
- US-B2- 10 210 615

## Description

### FIELD

The present disclosure relates to methods and systems for calibrating a camera, and in particular to methods and systems for calibrating a camera provided in a vehicle.

### BACKGROUND

Digital imaging devices, such as digital cameras, are used in various automotive applications. Calibration of the digital cameras may be cumbersome.

For example, in current approaches, either multiple settings of the camera versus a target or one image from a single setting of camera may be used. In either of two methods, a high number of characteristic 'points' may be required, for example in the form of circles or squares in precisely known locations to compute a space relation of those objects to the camera. This may put high requirements on the image quality and on the precision of the setup. Current automotive cameras, may use imagers (for example cameras or image sensors) with 4k or better resolution, a lens field-of-view may be from a few degrees to more than 150 degrees with diaphragm aperture below f/2, and a hyperfocal distance may be in the range from 10m to hundreds of meters. This may put high and practically unacceptable requirements on the calibration equipment, both regarding to the required precision and space and to the calibration time. Solutions including special immediate optics or collimators increase price of the calibration setup and at the same time reduce achievable precision.

Accordingly, there is a need to provide efficient methods and systems for calibrating a camera.

US 2016/182903 A1 discloses systems, methods and articles of manufacture for calibrating a camera. In one embodiment, a computing system may be coupled to a calibration apparatus and the camera to programmatically identify the intrinsic properties of the camera. The calibration apparatus includes a plurality of light sources which are controlled by the computer system. By selectively activating one or more of the light sources, the computer system identifies correspondences that relate the 3D position of the light sources to the 2D image captured by the camera. The computer system then calculates the intrinsics of the camera using the 3D to 2D correspondences. After the intrinsics are measured, cameras may be further calibrated to in order to identify 3D locations of objects within their field of view in a presentation area. Using passive markers in a presentation area, computing system may use an iterative process that estimates the actual pose of the camera.

US 2019/164308 A1 discloses a data information integrated management system, particularly an intelligent shooting training management system. The system includes a data acquisition apparatus, an operation terminal and a server. The operation terminal is connected with the data acquisition apparatus and the server. The data acquisition apparatus acquires a target paper image to obtain a photograph and a video record, and meanwhile, the data acquisition apparatus includes an automatic analysis module that analyzes a point of impact in the target paper image to obtain a shooting accuracy. The server manages the photograph, the video record, and the shooting accuracy. The operation terminal controls data exchange with the data acquisition apparatus and the server, and the operation terminal invokes and displays the photograph, the video record and the shooting accuracy. US 2010/165116 A1 discloses camera recalibration after movement by using a light source mounted proximate to the camera which projects a single point of light into the camera's field of view.

US 10 210 615 B2 discloses a method for camera calibration based on images depicting a 3D calibration object.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for calibrating a camera according to the appended claim 1.

In other words, a plurality of light sources is provided, and several images may be captured by the camera, wherein in each image one or more of the light sources is activated and the other light sources are not activated. In each image, the subset of light sources which is activated may be different. These images may then be used for calibration of the camera.

For example, the method may be a method for calibration of a vehicle sensing camera.

The light sources may include lights, which may be lights of a pre-determined wavelength range, or which may be light emitting diodes of a pre-determined wave length. All light sources may emit light of the same wavelength or wavelength range, or the light sources may have different wavelength ranges or wavelengths, so that the different light sources may be distinguished by their color.

Various methods for calibrating may be used. Conventional methods which usually are based on various images with different content may be applied to the plurality of captured images showing different light sources activated in each image. These images may be captured in an automated manner by synchronizing the steps of activating the light sources and capturing the image. Methods that could be used for the calibration are for an example Zhan method or Tsai method or other using multiple points on the single image.

According to another aspect, at least one activation scheme comprises an indication of one light source of the plurality of light sources at a time. By activating only one light source at a time, there may be no interference between the light sources, i.e. the light captured by the camera may unambiguously be assigned to the light source.

According to another aspect, at least one activation scheme comprises an indication of a plurality of light source at a time. By activating more than one light source at a time, more information may be acquired by each captured image, which may reduce the overall calibration time.

According to another aspect, the plurality of light sources at a time are at least a pre-determined distance apart when seen from the angle of the camera. This may avoid interference of the light sources, so that the light captured by the camera may unambiguously be assigned to the respective light source, even when more than one light source is activated at a time.

According to another aspect, capturing the image for each activation scheme comprises capturing an image of the plurality of light sources.

According to another aspect, the plurality of light sources are provided in a three-dimensional space according to a pre-determined (i.e. known) spatial relationship amongst each other, and in a pre-determined (i.e. known) spatial relationship to the camera. The light sources may be provided in locations which are not on a single line or not on a single two-dimensional plane, so that the full variety of the three-dimensional space may be used.

According to another aspect, the computer implemented method further comprises the steps carried out by the computer hardware components as claimed in the appended claims 5 and 11.

According to another aspect, the positions in the captured images are determined based on a method for identification of candidate points as possible characteristic points of a calibration pattern within an image of the calibration pattern, the method for identification of candidate points comprising the steps of: determining spots within a filtered image derived from the image of the calibration pattern, with a spot being defined as a coherent set of pixels of the filtered image having pixel values exceeding a threshold, for each determined spot calculating a central point of the determined spot, and identifying as candidate points all calculated central points, wherein the step of determining the spots comprises scanning the filtered image one pixel of the filtered image after another. According to a further aspect, if a scanned pixel has a pixel value exceeding the threshold, the scanning is paused and a spot contour tracing is executed starting with the last scanned pixel as current pixel and the second last pixel as previous pixel, the spot contour tracing comprising as a tracing step the steps of logging the current pixel as a contour pixel, and the method for identification of candidate points further comprises the steps of: for neighboring pixels adjacent to the current pixel, evaluating the condition, whether both the neighboring pixel has a pixel value exceeding the threshold and another neighboring pixel, which immediately precedes this neighboring pixel with respect to a sense of rotation around the current pixel, has a pixel value not exceeding the threshold, selecting from all neighboring pixels, for which the condition is fulfilled, the neighboring pixel farthest from the previous pixel with respect to said sense of rotation, and defining the current pixel as previous pixel and defining the selected neighboring pixel as current pixel; the spot contour tracing further comprising the steps of repeating the tracing step until the current pixel is again equal to the last scanned pixel, determining the spot as the set of pixels comprising the logged contour pixels and the pixels surrounded by the logged contour pixels.

A gravity point of the blurred light point may then be determined as the center of gravity of the pixels surrounded by the contour pixels.

According to another aspect, calibrating the camera comprises determining at least one intrinsic camera parameter or at least one extrinsic camera parameter or at least one distortion parameter.

For example, the at least one intrinsic parameter comprises at least one of a focal length of the camera, a sensitivity of the camera, or an aperture of the camera. For example, the at least one extrinsic parameter comprises at least one of a position of the camera in space or an orientation of the camera in space. For example, the at least one distortion parameter comprises at least one of a defocus parameter of the camera, a spherical aberration parameter of the camera, a coma parameter of the camera, an astigmatism parameter of the camera, a field curvature parameter of the camera, or an image distortion parameter of the camera.

In another aspect, the present disclosure is directed at a system according to appended claim 5.

The computer system may comprise a plurality of computer hardware components (for example a processing unit, at least one memory unit and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

According to another aspect, the computer system further comprises the plurality of light sources. For example, the plurality of light sources are provided in a three-dimensional space according to a pre-determined spatial relationship amongst each other, and in a pre-determined spatial relationship to the camera.

According to another aspect, the computer system further comprises a storage medium configured to store the captured images.

In another aspect, the present disclosure is directed at a non-transitory computer readable medium comprising instructions for carrying out several or all steps or aspects of the computer implemented method according to the appended claim 11. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: a calibration system according to various embodiments;
- Fig. 2A: an illustration of a captured image showing multiple non-interfering blurred light points;
- Fig. 2B: an illustration of an enlarged portion of a captured image with a single blurred light point with a computed gravity point according to various embodiments; and
- Fig. 3: a flow diagram illustrating a method for calibrating a camera according to various embodiments.

### DETAILED DESCRIPTION

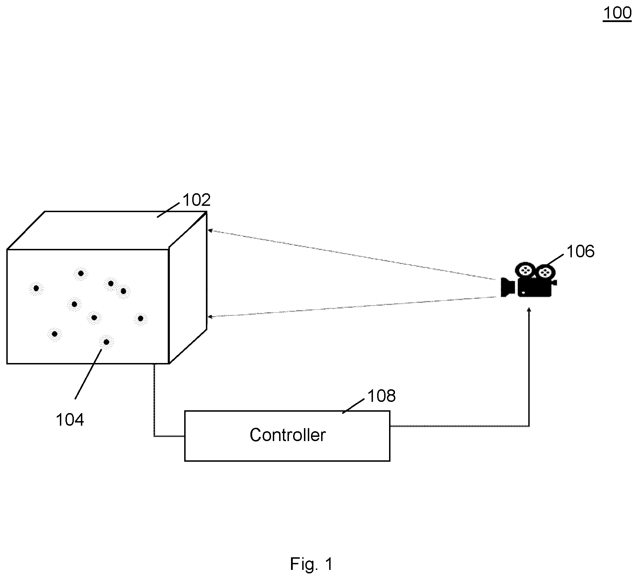

Fig. 1 shows a calibration system 100 according to various embodiments. A plurality of light points 104 may be provided in a 3D space 102. For example, the light points 104 may be small circular light points 104, and there may be provided between ten and several thousand light points 104. Each of the light points 104 may be individually controlled by a controller 108 (for example a computer). The location of the points 104 may be known relative to each other and relative to the estimated position of a camera 106. The camera 106 may be looking at the 3D space 102 the light points 104, and may be capturing a series of images (for example a movie) while the controller 108 switches on and off one or more of the light points 104 at the same time. The images captured by the camera 106 may be analyzed to produce intrinsic or extrinsic calibration data. The images captured by the camera 106 may be analyzed online (i.e. during the operation of the lights) or may be recorded (for example in a storage provided in the controller 108 or attached to the controller 108, or an external media) for analysis on the same or different equipment (i.e. for later analysis using the controller 108, or for analysis using a device different from the controller 108).

With the system as illustrated in Fig. 1, a single pose multi image calibration may be provided. For example, the calibrated camera may be a safety and road assistance camera.

According to various embodiments, the plurality of light sources may be provided in a fixed arrangement, so that the respective relative positions of the plurality of light sources may be fixed and known. The arrangement may then be provided at a single position (with a relative position in 2D or 3D) relative to the camera, so that the plurality of images may be captured without moving the arrangement. The distance from the camera to the arrangement (which may also be referred to as a calibration field) may be well below the hyperfocal distance of the camera.

The captured images may be provided as a sequence of 2D or 3D images (showing (blurred) light points of the light sources) presented to the camera with light points using wide spectra ('white'), single color or multi color points.

According to various embodiments, the calibration system and calibration method may allow calibration of very wide (for example 100 degree or wider) automotive cameras or very narrow (for example 30 degree or narrower) cameras in the limited space on the production line, where it may be easier to get a space below 1.8m / 1.8m / 3m than getting 10m / 10m / 10m or more. For narrow cameras (like for 28 degree where hyperfocal distance is >50m ) this may be a matter of making precision calibration practically 'doable' or 'impractical'.

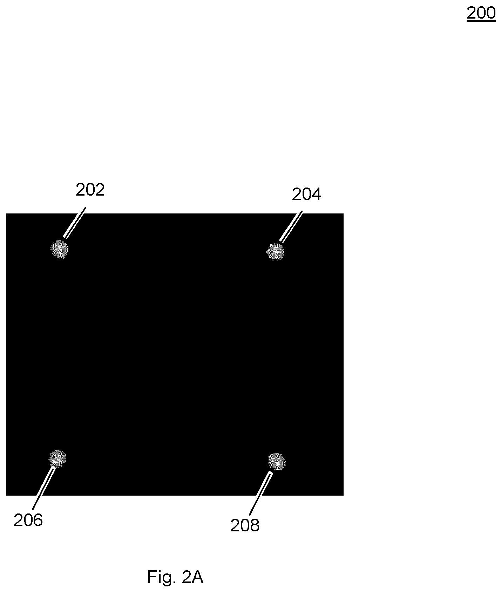

According to various embodiments, the calibration system and method may be applied at limited spaces, even for large image field where usually large distances from the camera are required. According to various embodiments, not sharp images may be used with the assumption that circular light points are seen by the camera in this case as distorted circles. Since not all the points are activated (in other words: switched on) at the same time, distribution of the light from a single point to the pixels on the captured image may be measured and it may be computed where the light was originally located in the projection (and hence in the 3D space relative to the camera). This may be done for each and every light point separately or in groups of light points if those do not interfere with each other (for example, if these light points are sufficiently spaced apart, as illustrated in Fig. 2A below, or if these light points have different colors, i.e. when the respective light sources emit light of different wavelengths or different wavelength ranges).

Fig. 2A shows an illustration 200 of a captured image showing multiple non-interfering blurred light points 202, 204, 206, 208 according to various embodiments.

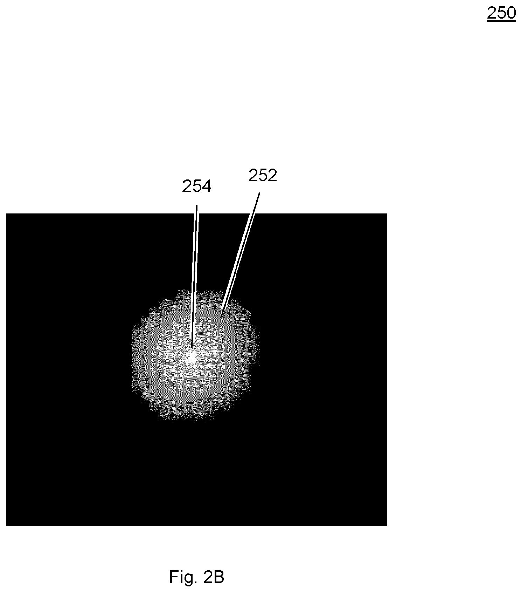

Fig. 2B shows an illustration 250 of an enlarged portion of a captured image with a single blurred light point 252 with a computed gravity point 254 according to various embodiments.

Each of light points in a captured image (for example in an imager of the camera) may allow computing the central point (in other words: the center of gravity) of the light point so that the same type of the information may be obtained as if a sharp image (i.e. an image in focus) would be captured, even if the light sources are out of focus. The method to find those points may be identical or similar to the method provided in WO/2017/093037, for example with the change for the correlation image to a circle or as a 'gravity point' approach surrounded by the 'equipotential plate'. As the result of this process, the location of the complete set of points may be obtained from multiple exposures but at one position. Those locations may be then used in the usual way in the calibration. As the end result, calibration values (for example both intrinsic and extrinsic) may be obtained after analysis of the series of the imaged (or pictures) taken (or acquired) from one single location of the camera while the size of the field (i.e. the 3D space where the light sources are required) may be small, for example around 1.5m/1.5m/1.5m and the distance to the camera may be dependent on the focal length but well below required in currently existing calibration methods.

According to various embodiments, light switching (i.e. selective activation of one or more light sources) may be synchronized with the camera operation, for example by close loop operation (where light sources are activated and then the image is captured, and then it may be proceeded to the next combination (or activation scheme) of active light sources) or by an open loop method (where only the approximate frame frequency may need to be known to synchronize the activation of the light sources and the capturing of the images, and where it may be started with the light sources switched off, and then for each step, the combination of light sources may be set, then it may be waited for a pre-determined frame period (for example for 3 frame periods), and it may then be proceeded to the next step (with the next activation scheme), wherein the last step may be to switch off all the light sources).

The sequence of activation of the light sources (in other words: the activation schemes) may be changed, but may be longer when there are single wavelength light sources only. In the analysis of captured images (which may be in the data format of video frames), it may be looked for the central frame between the change of the visible combination of light sources. In an example with 30 frames per second and 5 light sources being visible at the same time, and the field having 500 points (in other words: 500 light sources), the measurements (in other words: the capturing of the images) may be done in 10 seconds. This may be speeded up using multiple colors of the light sources for a color camera, so that even partially interfering points may be discriminable by their colors. With the previous conditions and three basic colors in the imager matrix (of the camera), the measurement may for example be done with in about 3.3 seconds for a simple scheme, and with a more complex scheme (three colors in shifted phases) the time may go down to about 3 seconds or lower. The difference between the simpler scheme (in other words: the 'longer' or slower method) and the more complex scheme (in other words: the 'shorter' or faster method) depends on the camera being capable to distinguish colors. In such case there may be two partially overlapping points with distinct primary colors which may be properly detectable, and the impact from each color may be properly deducted.

At the same time, issues with elimination of the color mosaic from the pictures may be reduced or avoided. The color mosaic in the imager is usually eliminated in the process of the point detection process. When multiple colors in the light sources are used, elimination of the mosaic may be easier, since light source correlate with colors on the imager color mask, even if different sets of colors are used.

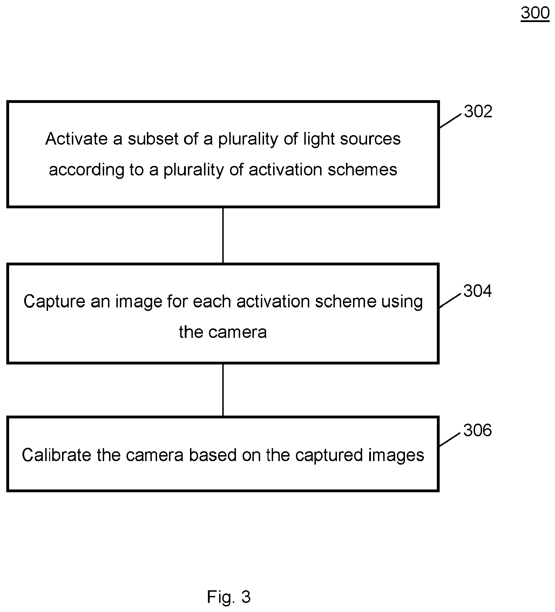

Fig. 3 shows a flow diagram 300 illustrating a method for calibrating a camera according to various embodiments. At 302, a subset of a plurality of light sources may be activated according to a plurality of activation schemes, wherein each activation scheme indicates which of the plurality of light sources to activate. At 304, an image may be captured for each activation scheme using the camera. At 306, the camera may be calibrated based on the captured images.

According to various embodiments, at least one activation scheme comprises an indication of one light source of the plurality of light sources at a time. According to various embodiments, at least one activation scheme comprises an indication of a plurality of light source at a time.

According to various embodiments, the plurality of light sources at a time are at least a pre-determined distance apart when seen from the angle of the camera.

According to various embodiments, capturing the image for each activation scheme comprises capturing an image of the plurality of light sources.

According to various embodiments, the plurality of light sources are provided in a three-dimensional space according to a pre-determined spatial relationship amongst each other, and in a pre-determined spatial relationship to the camera.

According to various embodiments, the method may further comprise determining positions of the activated light sources in the captured images.

According to various embodiments, the positions in the captured images are determined based on a method for identification of candidate points as possible characteristic points of a calibration pattern within an image of the calibration pattern, the method for identification of candidate points comprising the steps of: determining spots within a filtered image derived from the image of the calibration pattern, with a spot being defined as a coherent set of pixels of the filtered image having pixel values exceeding a threshold, for each determined spot calculating a central point of the determined spot, and identifying as candidate points all calculated central points, wherein the step of determining the spots comprises scanning the filtered image one pixel of the filtered image after another, wherein, if a scanned pixel has a pixel value exceeding the threshold, the scanning is paused and a spot contour tracing is executed starting with the last scanned pixel as current pixel and the second last pixel as previous pixel, the spot contour tracing comprising as a tracing step the steps of logging the current pixel as a contour pixel, for neighboring pixels adjacent to the current pixel, evaluating the condition, whether both the neighboring pixel has a pixel value exceeding the threshold and another neighboring pixel, which immediately precedes this neighboring pixel with respect to a sense of rotation around the current pixel, has a pixel value not exceeding the threshold, selecting from all neighboring pixels, for which the condition is fulfilled, the neighboring pixel farthest from the previous pixel with respect to said sense of rotation, and defining the current pixel as previous pixel and defining the selected neighboring pixel as current pixel; the spot contour tracing further comprising the steps of repeating the tracing step until the current pixel is again equal to the last scanned pixel, determining the spot as the set of pixels comprising the logged contour pixels and the pixels surrounded by the logged contour pixels.

According to various embodiments, calibrating the camera comprises determining at least one intrinsic camera parameter or at least one extrinsic camera parameter or at least one distortion parameter.

According to various embodiments, the at least one intrinsic parameter comprises at least one of a focal length of the camera, a sensitivity of the camera, or an aperture of the camera; wherein the at least one extrinsic parameter comprises at least one of a position of the camera in space or an orientation of the camera in space; and wherein the at least one distortion parameter comprises at least one of a defocus parameter of the camera, a spherical aberration parameter of the camera, a coma parameter of the camera, an astigmatism parameter of the camera, a field curvature parameter of the camera, or an image distortion parameter of the camera.

Each of the steps 302, 304, 306 and the further steps described above may be performed by computer hardware components.

### Reference numeral list

- 100: calibration system
- 102: three-dimensional space
- 104: plurality of light sources
- 106: camera
- 108: controller

- 200: illustration of a captured image
- 202: light point
- 204: light point
- 206: light point
- 208: light point

- 250: illustration of an enlarged portion of a captured image
- 252: blurred light point
- 254: gravity point

- 300: flow diagram
- 302: method step of activating a subset of a plurality of light sources
- 304: method step of capturing an image for each activation scheme
- 306: method step of calibrating the camera

## Claims

1. Computer implemented method for calibrating a camera (106),
the method comprising the following steps carried out by computer hardware components:
activating (302) a subset of a plurality of light sources according to a plurality of activation schemes, wherein each activation scheme indicates which of the plurality of light sources to activate;
capturing (304) an image for each activation scheme using the camera (106), wherein in each image, the subset of light sources which is activated is different;
calibrating (306) the camera (106) based on the captured images; and
determining positions of the activated light sources in the captured images; wherein calibrating (306) the camera (106) comprises determining at least one extrinsic camera parameter, wherein the at least one extrinsic parameter comprises at least one of a position of the camera in space or an orientation of the camera in space;
wherein capturing (304) the image for each activation scheme comprises capturing an image of the plurality of light sources;
wherein at least one activation scheme comprises an indication of one light source of the plurality of light sources at a time; and/or wherein at least one activation scheme comprises an indication of a plurality of light source at a time; and
wherein the plurality of light sources at a time are at least a pre-determined distance apart when seen from the angle of the camera (106).

2. The computer implemented method of claim 1,
wherein the plurality of light sources are provided in a three-dimensional space according to a pre-determined spatial relationship amongst each other, and in a pre-determined spatial relationship to the camera (106).

3. The computer implemented method of at least one of claims 1 to 2, wherein the positions in the captured images are determined based on a method for identification of candidate points as possible characteristic points of a calibration pattern within an image of the calibration pattern, the method for identification of candidate points comprising the steps of:
determining spots within a filtered image derived from the image of the calibration pattern, with a spot being defined as a coherent set of pixels of the filtered image having pixel values exceeding a threshold, for each determined spot calculating a central point of the determined spot, and
identifying as candidate points all calculated central points, wherein the step of determining the spots comprises scanning the filtered image one pixel of the filtered image after another.

4. The computer implemented method of claim 3,
wherein, if a scanned pixel has a pixel value exceeding the threshold, the scanning is paused and a spot contour tracing is executed starting with the last scanned pixel as current pixel and the second last pixel as previous pixel,
the spot contour tracing comprising as a tracing step the steps of logging the current pixel as a contour pixel,
wherein the method for identification of candidate points further comprises the steps of:
for neighboring pixels adjacent to the current pixel, evaluating the condition, whether both the neighboring pixel has a pixel value exceeding the threshold and another neighboring pixel, which immediately precedes this neighboring pixel with respect to a sense of rotation around the current pixel, has a pixel value not exceeding the threshold,
selecting from all neighboring pixels, for which the condition is fulfilled, the neighboring pixel farthest from the previous pixel with respect to said sense of rotation, and
defining the current pixel as previous pixel and defining the selected neighboring pixel as current pixel;
the spot contour tracing further comprising the steps of repeating the tracing step until the current pixel is again equal to the last scanned pixel,
determining the spot as the set of pixels comprising the logged contour pixels and the pixels surrounded by the logged contour pixels.

5. The computer implemented method of at least one of claims 1 to 4,
wherein calibrating (306) the camera (106) further comprises determining at least one intrinsic camera parameter or at least one distortion parameter.

6. The computer implemented method of claim 5,
wherein the at least one intrinsic parameter comprises at least one of a focal length of the camera (106), a sensitivity of the camera (106), or an aperture of the camera (106); and
wherein the at least one distortion parameter comprises at least one of a defocus parameter of the camera (106), a spherical aberration parameter of the camera (106), a coma parameter of the camera (106), an astigmatism parameter of the camera (106), a field curvature parameter of the camera (106), or an image distortion parameter of the camera (106).

7. Computer system, the computer system comprising a plurality of computer hardware components configured to carry out steps of the computer implemented method of at least one of claims 1 to 6.

8. The computer system of claim 7, further comprising:
the plurality of light sources.

9. The computer system of claim 8,
wherein the plurality of light sources are provided in a three-dimensional space according to a pre-determined spatial relationship amongst each other, and in a pre-determined spatial relationship to the camera (106).

10. The computer system of at least one of claims 7 to 9, further comprising: a storage medium configured to store the captured images.

11. Non-transitory computer readable medium comprising instructions for carrying out the computer implemented method of at least one of claims 1 to 6.

## Patentansprüche

1. Computerimplementiertes Verfahren zum Kalibrieren einer Kamera (106),
wobei das Verfahren die folgenden durch Computerhardwarekomponenten ausgeführten Schritte umfasst:
Aktivieren (302) einer Teilmenge einer Vielzahl von Lichtquellen gemäß einer Vielzahl von Aktivierungsschemata, wobei jedes Aktivierungsschema angibt, welche der Vielzahl von Lichtquellen zu aktivieren ist;
Aufnehmen (304) eines Bildes für jedes Aktivierungsschema unter Verwendung der Kamera (106), wobei in jedem Bild die aktivierte Teilmenge von Lichtquellen unterschiedlich ist;
Kalibrieren (306) der Kamera (106) basierend auf den aufgenommenen Bildern; und
Bestimmen von Positionen der aktivierten Lichtquellen in den aufgenommenen Bildern;
wobei das Kalibrieren (306) der Kamera (106) das Bestimmen mindestens eines extrinsischen Kameraparameters umfasst, wobei der mindestens eine extrinsische Parameter mindestens eines von einer Position der Kamera im Raum oder einer Orientierung der Kamera im Raum umfasst;
wobei das Aufnehmen (304) des Bildes für jedes Aktivierungsschema das Aufnehmen eines Bildes der Vielzahl von Lichtquellen umfasst;
wobei mindestens ein Aktivierungsschema eine Angabe einer Lichtquelle der Vielzahl von Lichtquellen zu einem Zeitpunkt umfasst; und/oder wobei mindestens ein Aktivierungsschema eine Angabe einer Vielzahl von Lichtquellen zu einem Zeitpunkt umfasst; und
wobei die Vielzahl von Lichtquellen zu einem Zeitpunkt mindestens einen vorbestimmten Abstand voneinander aufweist, wenn sie aus dem Winkel der Kamera (106) gesehen wird.

2. Computerimplementiertes Verfahren nach Anspruch 1,
wobei die Vielzahl von Lichtquellen in einem dreidimensionalen Raum gemäß einer vorbestimmten räumlichen Beziehung untereinander und in einer vorbestimmten räumlichen Beziehung zur Kamera (106) vorgesehen sind.

3. Computerimplementiertes Verfahren nach mindestens einem der Ansprüche 1 bis 2,
wobei die Positionen in den aufgenommenen Bildern basierend auf einem Verfahren zur Identifizierung von Kandidatenpunkten als mögliche charakteristische Punkte eines Kalibrierungsmusters innerhalb eines Bildes des Kalibrierungsmusters bestimmt werden, wobei das Verfahren zur Identifizierung von Kandidatenpunkten die Schritte umfasst:
Bestimmen von Spots innerhalb eines aus dem Bild des Kalibrierungsmusters abgeleiteten gefilterten Bildes, wobei ein Spot als eine zusammenhängende Menge von Pixeln des gefilterten Bildes definiert ist, die Pixelwerte aufweist, die einen Schwellenwert überschreiten, Berechnen eines zentralen Punkts des bestimmten Spots für jeden bestimmten Spot, und
Identifizieren aller berechneten zentralen Punkte als Kandidatenpunkte, wobei der Schritt des Bestimmens der Spots das Scannen des gefilterten Bildes ein Pixel des gefilterten Bildes nach dem anderen umfasst.

4. Computerimplementiertes Verfahren nach Anspruch 3,
wobei, wenn ein gescanntes Pixel einen Pixelwert aufweist, der den Schwellenwert überschreitet, das Scannen pausiert wird und eine Konturverfolgung des Spots ausgeführt wird, beginnend mit dem zuletzt gescannten Pixel als aktuellem Pixel und dem vorletzten Pixel als vorherigem Pixel,
die Konturverfolgung des Spots als Verfolgungsschritt die Schritte des Protokollierens des aktuellen Pixels als Konturpixel umfasst,
wobei das Verfahren zur Identifizierung von Kandidatenpunkten ferner die Schritte umfasst:
für benachbarte Pixel, die an das aktuelle Pixel angrenzen, Bewerten der Bedingung, ob sowohl das benachbarte Pixel einen Pixelwert aufweist, der den Schwellenwert überschreitet, als auch ein anderes benachbartes Pixel, das diesem benachbarten Pixel in Bezug auf einen Drehsinn um das aktuelle Pixel unmittelbar vorausgeht, einen Pixelwert aufweist, der den Schwellenwert nicht überschreitet,
Auswählen aus allen benachbarten Pixeln, für die die Bedingung erfüllt ist, des benachbarten Pixels, das vom vorherigen Pixel in Bezug auf den genannten Drehsinn am weitesten entfernt ist, und
Definieren des aktuellen Pixels als vorheriges Pixel und Definieren des ausgewählten benachbarten Pixels als aktuelles Pixel;
wobei die Konturverfolgung des Spots ferner die Schritte des Wiederholens des Verfolgungsschritts umfasst, bis das aktuelle Pixel wieder gleich dem zuletzt gescannten Pixel ist,
Bestimmen des Spots als die Menge von Pixeln, die die protokollierten Konturpixel und die von den protokollierten Konturpixeln umgebenen Pixel umfasst.

5. Computerimplementiertes Verfahren nach mindestens einem der Ansprüche 1 bis 4,
wobei das Kalibrieren (306) der Kamera (106) ferner das Bestimmen mindestens eines intrinsischen Kameraparameters oder mindestens eines Verzerrungsparameters umfasst.

6. Computerimplementiertes Verfahren nach Anspruch 5,
wobei der mindestens eine intrinsische Parameter mindestens eines von einer Brennweite der Kamera (106), einer Empfindlichkeit der Kamera (106) oder einer Blende der Kamera (106) umfasst; und
wobei der mindestens eine Verzerrungsparameter mindestens eines von einem Defokussierungsparameter der Kamera (106), einem sphärischen Aberrationsparameter der Kamera (106), einem Koma-Parameter der Kamera (106), einem Astigmatismusparameter der Kamera (106), einem Bildfeldwölbungsparameter der Kamera (106) oder einem Bildverzerrungsparameter der Kamera (106) umfasst.

7. Computersystem, wobei das Computersystem eine Vielzahl von Computerhardwarekomponenten umfasst, die dazu eingerichtet sind, Schritte des computerimplementierten Verfahrens nach mindestens einem der Ansprüche 1 bis 6 auszuführen.

8. Computersystem nach Anspruch 7, ferner umfassend:
die Vielzahl von Lichtquellen.

9. Computersystem nach Anspruch 8,
wobei die Vielzahl von Lichtquellen in einem dreidimensionalen Raum gemäß einer vorbestimmten räumlichen Beziehung untereinander und in einer vorbestimmten räumlichen Beziehung zur Kamera (106) vorgesehen sind.

10. Computersystem nach mindestens einem der Ansprüche 7 bis 9, ferner umfassend:
ein Speichermedium, das dazu eingerichtet ist, die aufgenommenen Bilder zu speichern.

11. Nicht-transitorisches computerlesbares Medium, das Anweisungen zum Ausführen des computerimplementierten Verfahrens nach mindestens einem der Ansprüche 1 bis 6 umfasst.

## Revendications

1. Procédé mis en œuvre par ordinateur pour étalonner une caméra (106),
le procédé comprenant les étapes suivantes exécutées par des composants matériels d'ordinateur :
activer (302) un sous-ensemble d'une pluralité de sources lumineuses selon une pluralité de schémas d'activation, dans lequel chaque schéma d'activation indique laquelle de la pluralité de sources lumineuses doit être activée ;
capturer (304) une image pour chaque schéma d'activation au moyen de la caméra (106), dans lequel, dans chaque image, le sous-ensemble de sources lumineuses qui est activé est différent ;
étalonner (306) la caméra (106) sur la base des images capturées ; et
déterminer des positions des sources lumineuses activées dans les images capturées ;
dans lequel l'étalonnage (306) de la caméra (106) comprend la détermination d'au moins un paramètre extrinsèque de caméra, dans lequel ledit au moins un paramètre extrinsèque comprend au moins un élément parmi une position de la caméra dans l'espace ou une orientation de la caméra dans l'espace ;
dans lequel la capture (304) de l'image pour chaque schéma d'activation comprend la capture d'une image de la pluralité de sources lumineuses ;
dans lequel au moins un schéma d'activation comprend une indication d'une source lumineuse de la pluralité de sources lumineuses à la fois ; et/ou dans lequel au moins un schéma d'activation comprend une indication d'une pluralité de sources lumineuses à la fois ; et
dans lequel la pluralité de sources lumineuses à la fois sont séparées d'au moins une distance prédéterminée lorsqu'elles sont vues depuis l'angle de la caméra (106).

2. Procédé mis en œuvre par ordinateur selon la revendication 1,
dans lequel la pluralité de sources lumineuses sont prévues dans un espace tridimensionnel selon une relation spatiale prédéterminée entre elles, et selon une relation spatiale prédéterminée par rapport à la caméra (106).

3. Procédé mis en œuvre par ordinateur selon l'une au moins des revendications 1 à 2,
dans lequel les positions dans les images capturées sont déterminées sur la base d'un procédé d'identification de points candidats en tant que points caractéristiques possibles d'un motif d'étalonnage dans une image du motif d'étalonnage, le procédé d'identification de points candidats comprenant les étapes consistant à :
déterminer des taches à l'intérieur d'une image filtrée dérivée de l'image du motif d'étalonnage, une tache étant définie comme un ensemble cohérent de pixels de l'image filtrée présentant des valeurs de pixel dépassant un seuil,
calculer pour chaque tache déterminée un point central de la tache déterminée, et
identifier tous les points centraux calculés comme points candidats, dans lequel l'étape de détermination des taches comprend le balayage de l'image filtrée, un pixel de l'image filtrée après l'autre.

4. Procédé mis en œuvre par ordinateur selon la revendication 3,
dans lequel, si un pixel balayé présente une valeur de pixel dépassant le seuil, le balayage est interrompu et un suivi du contour de la tache est exécuté en commençant par le dernier pixel balayé en tant que pixel courant et l'avant-dernier pixel en tant que pixel précédent,
le suivi du contour de la tache comprenant en tant qu'étape de suivi les étapes consistant à consigner le pixel courant en tant que pixel de contour,
dans lequel le procédé d'identification de points candidats comprend en outre les étapes consistant à :
pour des pixels voisins adjacents au pixel courant, évaluer la condition selon laquelle à la fois le pixel voisin présente une valeur de pixel dépassant le seuil et un autre pixel voisin, qui précède immédiatement ce pixel voisin par rapport à un sens de rotation autour du pixel courant, présente une valeur de pixel ne dépassant pas le seuil,
sélectionner, parmi tous les pixels voisins pour lesquels la condition est remplie, le pixel voisin le plus éloigné du pixel précédent par rapport audit sens de rotation, et
définir le pixel courant comme pixel précédent et définir le pixel voisin sélectionné comme pixel courant ;
le suivi du contour de la tache comprenant en outre les étapes consistant à répéter l'étape de suivi jusqu'à ce que le pixel courant soit à nouveau égal au dernier pixel balayé,
déterminer la tache comme l'ensemble de pixels comprenant les pixels de contour consignés et les pixels entourés par les pixels de contour consignés.

5. Procédé mis en œuvre par ordinateur selon l'une au moins des revendications 1 à 4,
dans lequel l'étalonnage (306) de la caméra (106) comprend en outre la détermination d'au moins un paramètre intrinsèque de caméra ou d'au moins un paramètre de distorsion.

6. Procédé mis en œuvre par ordinateur selon la revendication 5,
dans lequel ledit au moins un paramètre intrinsèque comprend au moins un élément parmi une distance focale de la caméra (106), une sensibilité de la caméra (106) ou une ouverture de la caméra (106) ; et
dans lequel ledit au moins un paramètre de distorsion comprend au moins un élément parmi un paramètre de défocalisation de la caméra (106), un paramètre d'aberration sphérique de la caméra (106), un paramètre de coma de la caméra (106), un paramètre d'astigmatisme de la caméra (106), un paramètre de courbure de champ de la caméra (106), ou un paramètre de distorsion d'image de la caméra (106).

7. Système d'ordinateur, le système d'ordinateur comprenant une pluralité de composants matériels d'ordinateur configurés pour exécuter les étapes du procédé mis en œuvre par ordinateur selon l'une au moins des revendications 1 à 6.

8. Système d'ordinateur selon la revendication 7, comprenant en outre :
la pluralité de sources lumineuses.

9. Système d'ordinateur selon la revendication 8,
dans lequel la pluralité de sources lumineuses sont prévues dans un espace tridimensionnel selon une relation spatiale prédéterminée entre elles, et selon une relation spatiale prédéterminée par rapport à la caméra (106).

10. Système d'ordinateur selon l'une au moins des revendications 7 à 9, comprenant en outre :
un support de stockage configuré pour stocker les images capturées.

11. Support non transitoire lisible par ordinateur comprenant des instructions pour exécuter le procédé mis en œuvre par ordinateur selon l'une au moins des revendications 1 à 6.
